# FASCICULE DE BREVET EUROPEEN

(11) **EP 2 648 877 B1**
(45) Date de publication et mention de la délivrance du brevet: **04.03.2015**
(21) Numéro de dépôt: 11805898.1
(22) Date de dépôt: 29.11.2011
(51) Int. Cl.: B25B 5/08, B25B 5/16, F16H 25/14, B23Q 3/06

(54) **BRIDE DE SERRAGE-DESSERRAGE**
KLEMM-/LÖSEFLANSCH
CLAMPING/RELEASING FLANGE

(30) Priorité: 07.12.2010 FR 1004768
(43) Date de publication de la demande: 16.10.2013
(73) Titulaire: Norelem SAS, 10280 Fontaine les Grès (FR)
(72) Inventeur: CARDON-DUBOIS, Damien, 10150 Lavau (FR)
(74) Mandataire: Hammond, William
(86) Numéro de dépôt international: PCT/FR2011/000624
(87) Numéro de publication internationale: WO 2012/076767

(56) Documents cités:
- EP-A1- 1 442 833
- FR-A1- 2 767 731
- US-A- 4 825 717
- US-A- 5 735 128

## Description

L'invention est relative à une bride de serrage/desserrage et de maintien d'un panneau en plaque, sur une platine d'usinage.

Les panneaux en plaque, notamment les plaques métalliques, sont habituellement fermement fixées sur une platine de machine - outil, en vue de leur traitement d'usinage.

Les systèmes de fixation les plus courants comprennent au moins un corps support, un bâti réglable en position par rapport à ce corps support dans la direction de serrage/desserrage et une ou plusieurs pointes de serrage et de maintien, par enfoncement dans l'un des bords latéraux formant la tranche du panneau.

La ou les pointes de serrage sont constituées par un acier spécial, de grande dureté, afin de permettre un enfoncement suffisant de ces dernières dans le matériau, plus tendre, du bord latéral de la plaque.

Ce mode de serrage/desserrage et de maintien donne satisfaction, dans la mesure où il permet, en pratique, de libérer la totalité de la surface de la plaque à usiner, dans le but d'appliquer à cette dernière un traitement d'usinage quelconque.

Pour une description plus détaillée de ce type de fixation selon le préambule de la revendication 1, on pourra utilement se reporter à la demande de brevet EP 1 442 833, publiée le 04/08/2004.

Le type de fixation précité présente toutefois l'inconvénient de nécessiter l'application d'un choc sur chacune des pointes de serrage/desserrage, au moyen d'un outil spécifique, tel qu'une massette ou autre.

Un tel mode opératoire implique, en pratique, l'application successive d'un choc distinct sur chacune des pointes de serrage/desserrage ce qui, en conséquence, provoque un enfoncement différent de chaque pointe de serrage/desserrage dans le bord latéral de la plaque, cet enfoncement différent étant susceptible de nuire à la stabilité de la fixation d'ensemble.

En outre, un tel système de fixation nécessite la mise en oeuvre de systèmes de fixation fixes et de systèmes de fixation mobiles, lesquels nécessitent, en premier lieu, un simple positionnement de la plaque au contact des systèmes de fixation fixes, la mise en place des systèmes de fixation mobiles et l'enfoncement des pointes de serrage/desserrage de ces derniers, puis, en dernier lieu, l'enfoncement des pointes de serrage/desserrage des systèmes de fixation fixes.

En définitive, la mise en place, le serrage et le maintien d'une plaque pour usinage au moyen des systèmes de fixation fixes et mobiles précités ne nécessitent pas moins de neuf opérations élémentaires successives, compte non tenu du nombre de systèmes de fixation fixes ou mobiles utilisés et du nombre de pointes de serrage/desserrage à enfoncer. En conséquence, un tel mode opératoire peut conduire à une incertitude de positionnement et de maintien de la plaque sensiblement égale à la somme des incertitudes de positionnement de chacune des opérations élémentaires.

En outre, et en raison du nombre important d'opérations élémentaires précitées, un tel mode opératoire apparaît consommateur de temps et peu propice à une automatisation du processus global de serrage/desserrage, maintien sur une chaîne d'usinage automatique.

La présente invention a pour objet de remédier à l'ensemble des inconvénients des systèmes de fixation de l'art antérieur par la mise en oeuvre d'une bride de serrage/desserrage et de maintien d'un panneau en plaque pour usinage, à commande sensiblement continue du serrage, du maintien et du desserrage des pointes de serrage.

En particulier, un autre objet de la présente invention est la mise en oeuvre, grâce à la commande sensiblement continue précitée, de l'application concomitante d'un effort de serrage/desserrage uniforme sur au moins deux pointes de serrage/desserrage équipant la bride de serrage/desserrage objet de l'invention, ce qui permet d'améliorer la précision du positionnement de la plaque pour usinage.

Un autre objet de la présente invention est également la mise en oeuvre, grâce au caractère uniforme et concomitant de l'effort de serrage/desserrage appliqué sur les au moins deux pointes de serrage/desserrage, d'une bride de serrage/desserrage à pointes de serrage/desserrage multiples alignées selon une ligne ou un motif de serrage susceptible d'être matérialisée sur la quasi-totalité de la dimension d'un bord latéral de la plaque, et, ainsi, adapté aux dimensions de celle-ci, afin de permettre une amélioration sensible de la précision du positionnement et du maintien de la plaque sur une chaîne d'usinage.

Un autre objet de la présente invention est également, grâce à la mise en oeuvre de la commande sensiblement continue du serrage, du maintien et du desserrage des pointes de serrage, la fourniture d'une bride de serrage/desserrage et de maintien particulièrement adaptée à l'installation et à la commande automatique sur une chaîne d'usinage.

La bride de serrage/desserrage et de maintien d'un panneau en plaque sur une platine d'usinage, objet de l'invention est définie à la revendication 1.

La bride de serrage/desserrage selon l'invention est en outre remarquable en ce que lesdits moyens de commande continue du déplacement comportent au moins un moyen de came comportant une surface d'entraînement profilée formant came de poussée et entraînée à rotation continue autour d'un axe de rotation orthogonal à la direction de serrage/desserrage et un galet de contact assurant la liaison mécanique à glissement entre la surface d'entraînement profilée du moyen de came et le palonnier.

La bride de serrage/desserrage selon l'invention est en outre remarquable en ce que les moyens de commande continue comportent en outre un taquet de rappel du support mobile et du palonnier, solidaire du palonnier respectivement du moyen de came par l'intermédiaire d'une goupille et d'une goupille de rappel.

La bride de serrage/desserrage selon l'invention est également remarquable en ce que la goupille de rappel est solidaire du taquet de rappel et engagée dans une gorge formant came de retour ménagée dans le moyen de came, la came de retour étant complémentaire de la surface d'entraînement profilée formant came de poussée du moyen de came.

La bride de serrage/desserrage selon l'invention est également remarquable en ce que l'ensemble formé par le support mobile desdites au moins deux pointes de serrage et par le moyen de commande continue du serrage/desserrage forme une commande 1/4 de tour ou 1/2 tour.

La bride de serrage/desserrage selon l'invention est également remarquable en ce que le support mobile comporte une pluralité de pointes de serrage distribuées symétriquement sur le support mobile par rapport au plan longitudinal de symétrie du bâti et du support mobile.

La bride de serrage/desserrage selon l'invention est également remarquable en ce que la liaison mécanique entre chaque pointe de serrage et le support mobile ou palonnier inclut au moins une tige de poussée enfichable dans un logement calibré ménagé dans la face active du palonnier ou support mobile, ladite tige de poussée comportant un bossage de fixation à son extrémité libre émergeant d'un logement calibré, et, une pointe de serrage active présentant un corps de pointe de diamètre adapté à l'orifice traversant du bâti dans lequel cette pointe de serrage active est engagée, l'extrémité non émergente de la pointe de serrage active étant en liaison mécanique avec ledit bossage de fixation de la tige de poussée.

La bride de serrage/desserrage et de maintien objet de l'invention trouve application à l'industrie de la métallerie , pour l'usinage et/ou le traitement de surface de panneaux en plaque, métalliques ou non, de tout type.

La bride de serrage/desserrage et de maintien, objet de l'invention, sera mieux comprise à la lecture de la description et à l'observation des dessins ci-après dans lesquels les mêmes références désignent les mêmes éléments et où :
- la figure 1 représente, à titre illustratif, une vue de dessus de la bride de serrage/desserrage objet de l'invention, dans laquelle le couvercle a été ôté ;
- la figure 2 représente, à titre illustratif, une vue en perspective éclatée de la bride de serrage/desserrage objet de l'invention, aux fins de représenter l'ensemble des éléments essentiels constitutifs de cette dernière ;
- la figure 3 représente, à titre illustratif, une vue en coupe de la bride de serrage/desserrage et de maintien représentée en figure 1, selon le plan de coupe A-A, plan longitudinal de symétrie de celle-ci ;
- la figure 4 représente, à titre illustratif, une vue en coupe, selon la ligne de coupe EE de la figure 1, aux fins de représenter la position et l'agencement relatif des axes de symétrie axiale des éléments désignés came, goupille et goupille de rappel, permettant de constituer la liaison mécanique entre le moyen de came et le palonnier, porteur des pointes de serrage/desserrage et de maintien de la bride objet de l'invention ;
- la figure 5 représente une variante avantageuse non limitative de mise en oeuvre de la bride de serrage/desserrage et de maintien objet de l'invention selon une vue de gauche de cette dernière, telle que représentée en figure 1.

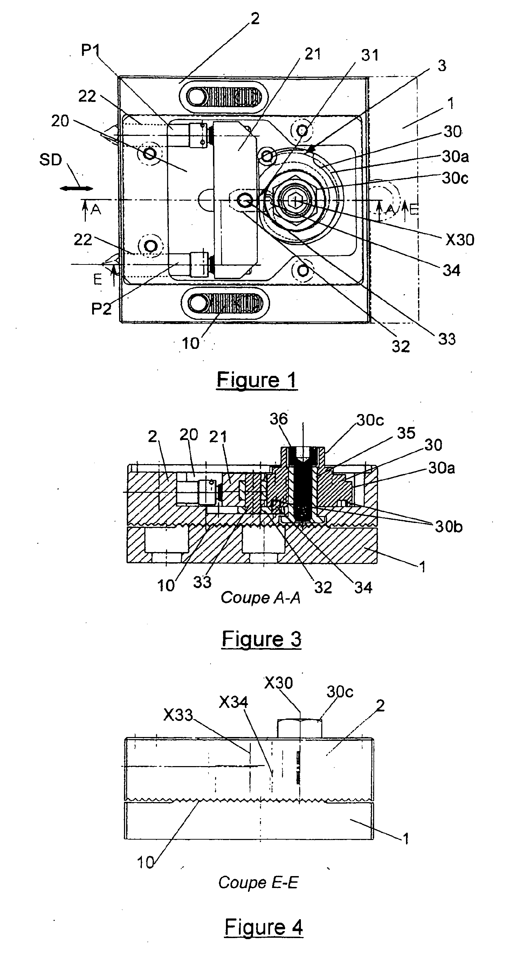

En référence à la figure 1, la bride de serrage/desserrage et de maintien d'un panneau en plaque sur une platine d'usinage, conforme à l'objet de la présente invention, comporte, ainsi que représentée sur la figure précitée, un corps support 1 et un bâti 2, réglable en position par rapport au corps support 1, dans la direction de serrage/desserrage représentée par la double flèche SD sur la figure précitée. Sur cette figure, le corps support 1 représenté en trait mixte s'étend sous le bâti 2 et apparaît dans deux lumières de réglage en position du bâti 2 par rapport au corps support 1.

En outre, la bride de serrage/desserrage objet de l'invention comprend au moins une pointe de serrage et de maintien, notées P1 et P2 et limitées à deux dans la représentation de la figure 1 de manière non limitative. Les pointes de serrage précitées permettent d'assurer le serrage et le maintien du panneau en plaque par enfoncement dans l'un des bords latéraux de ce dernier.

Selon un aspect remarquable de la bride de serrage/desserrage et de maintien d'un panneau en plaque objet de l'invention, cette bride comprend en outre, ainsi que représenté sur la figure 1 précitée, un logement 20 ménagé dans le bâti 2. Dans le logement précité est placé un support mobile 21 des pointes de serrage et de maintien P1 et P2. Ces pointes de serrage et de maintien émergent chacune au moins partiellement au travers d'un orifice traversant 22 ménagé dans le bâti 2 et débouchant dans le logement 20 précité. À l'observation de la figure 1, on comprend que, de préférence, un orifice traversant 22 est prévu pour chaque pointe de serrage et de maintien P1 et P2 équipant la bride de serrage/desserrage et de maintien objet de l'invention. Chaque orifice traversant 22 peut, de préférence, servir de guide à chaque pointe de serrage/desserrage lors du déplacement en translation selon la direction de déplacement SD, ainsi qu'il sera décrit de manière plus détaillée ultérieurement dans la description.

Enfin, ainsi qu'on pourra l'observer sur la figure 1, le logement 20 comporte également des ressources 3 de commande continue du déplacement, du serrage, du maintien et du desserrage des pointes de serrage/desserrage et de maintien P1 et P2 dans la direction de serrage/desserrage SD précitée.

En ce qui concerne la fabrication du corps support 1 et du bâti 2, on indique que ces derniers sont de préférence venus de matière, par moulage d'un alliage ferreux, non-ferreux ou autre, ou usinés par décolletage.

Ainsi qu'on l'observera également sur la figure 1, le support mobile 21 constitue un palonnier exécutant la transmission de la commande continue du déplacement des pointes de serrage et de maintien P1 et P2 selon un mouvement de translation de ces dernières dans la direction de serrage/desserrage SD précitée. La notion de palonnier recouvre tout élément de support mobile permettant d'assurer la translation simultanée et l'application d'un effort instantané sensiblement identique sur chacune des pointes de serrage/desserrage dans la direction de serrage/desserrage SD.

De manière plus spécifique, ainsi qu'il apparaît également sur la figure 1, les ressources 3 de commande continue du déplacement comportent au moins une came 30 comportant une surface d'entraînement profilée 30a et formant une came de poussée. La came de poussée précitée est entraînée à rotation continue autour d'un axe de rotation, noté X30, cet axe de rotation étant orthogonal à la direction de serrage/desserrage SD, et, en particulier orthogonal au plan de la feuille contenant la figure 1. Les ressources 3 de commande continue du déplacement comportent en outre un galet de contact 31 assurant la liaison mécanique à glissement entre la surface d'entraînement profilée 30a de la came 30 et le palonnier 21.

De même, les ressources 3 de commande continue comprennent en outre un taquet de rappel 32 du support mobile et du palonnier 21, ce taquet de rappel étant solidaire du palonnier 21 et de la came 30 par l'intermédiaire d'une goupille 33 et d'une goupille de rappel 34.

Ainsi qu'on pourra l'observer notamment sur la figure 1 et sur la figure 3, la goupille de rappel 34 est solidaire du taquet de rappel 32 et engagée dans une gorge formant une came de retour 30b, ménagée dans la came 30. Bien entendu la topographie de la came de retour 30b est complémentaire de la surface d'entraînement profilée formant la came de poussée 30a de la came 30. Le caractère complémentaire de la came de retour 30b vis-à-vis de la surface d'entraînement profilée formant la came de poussée 30a s'entend de la complémentarité cinématique de la surface d'entraînement profilée formant la came de poussée 30a précitée, pour assurer le retour en sens inverse du palonnier 21 et des pointes de serrage/desserrage et de maintien P1 et P2 dans la direction de serrage/desserrage SD.

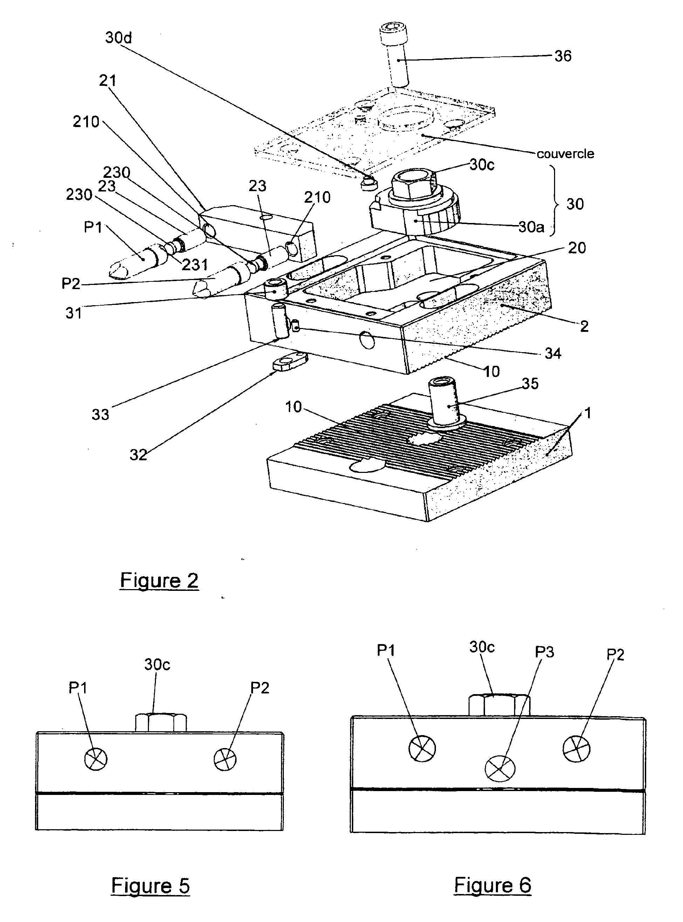

Une description plus détaillée de l'ensemble de la bride de serrage/desserrage objet de l'invention est maintenant donnée en référence à la vue en perspective éclatée de cette dernière, telle qu'illustrée en figure 2.

Sur la figure 2, on constate que le corps support 1 et le bâti 2 réglable en position dans la direction de serrage/desserrage SD sont mécaniquement liés par une liaison à crémaillère ajustable 10. La liaison à crémaillère précitée consiste en des rainures rectilignes ménagées sur les faces en vis-à-vis du corps support 1 et du bâti 2 et orthogonales au plan longitudinal de symétrie, plan A-A de la figure 1, et en conséquence à la direction de serrage/desserrage précitée. Le bâti 2 réglable en position peut ainsi être réglé par rapport au bord du panneau en plaque, l'ensemble étant fixé sur la platine de la machine-outil. En conséquence les pointes de serrage/desserrage en position rétractée sont également placées compte tenues de la nature du matériau du panneau en plaque, des caractéristiques mécaniques de ce dernier et de la profondeur d'implantation prévue des pointes de serrage/desserrage.

En outre, ainsi qu'on pourra l'observer sur la figure 2, la came 30 est montée dans le logement 20 par l'intermédiaire d'une douille 35, l'ensemble étant fixé à la paroi inférieure du bâti 2 par l'intermédiaire d'une vis d'assemblage 36. La came 30 est ainsi montée à rotation autour de la douille 35. Le sommet de la came 30 est muni d'une tête de boulon 30c destinée à permettre la commande de la rotation en continu de la came 30 soit manuellement, au moyen d'une clé à pans, soit par l'intermédiaire d'un outil à commande automatique intégré à la machine-outil par exemple. Un pion d'arrêt 30d permet, si nécessaire, de limiter et adapter la course de la came 30 et finalement pu palonnier 21 et des pointes de serrage/desserrage et de maintien P1 et P2, en fonction du type de panneau en plaque à installer sur la machine-outil.

Le galet 31 assurant le contact entre la surface profilée 30a et le palonnier 21 est constitué en un matériau non abrasif, tel qu'un alliage bronze-béryllium par exemple. Il en est de même en ce qui concerne la goupille de rappel 34, laquelle est engagée dans la gorge 30b ménagée sur la surface inférieure de la came 30 en vis-à-vis de la crémaillère 10, afin d'assurer un rappel par entraînement sans frottement important de l'ensemble constitué par la goupille de rappel 34, le taquet de rappel 32, la goupille 33 et finalement le palonnier 21 et les pointes de serrage/desserrage et de maintien P1 et P2.

Un agencement de l'ensemble précité et de la came 30 comportant la came de poussée formée par la surface profilée 30a et par la gorge 30b, la came 30 étant montée par l'intermédiaire de la douille 35 et de la vis d'assemblage 36, est représenté de manière détaillée en figure 3 dans le plan de coupe A-A de la figure 1.

Les positions des axes de rotation de la came 30, de la goupille 33 et de la goupille de rappel 34, axes notés X30, X33 et X34 sur la figure 3, sont représentées en figure 4.

Enfin, ainsi que représenté notamment en figure 2, la liaison mécanique entre chaque pointe de serrage/desserrage et de maintien P1, P2 et le support mobile ou palonnier 21 comprend avantageusement une tige de poussée 23 enfichable dans un logement calibré 210, ménagé dans la face active du palonnier ou support mobile 21, porteuse des pointes de serrage/desserrage et de maintien. Chaque tige de poussée 23 comporte un bossage de fixation 230 à son extrémité libre émergeant d'un logement calibré 210.

Ainsi qu'on l'observera en outre sur la figure 2, chaque pointe de serrage proprement dite ou active présente avantageusement un corps de pointe de diamètre adapté à l'orifice traversant 22 du bâti 2 dans lequel cette pointe de serrage active est engagée. L'extrémité non émergente de la pointe de serrage actif précitée est fixée mécaniquement avec le bossage de fixation 230 de la tige de poussée 23. La fixation peut-être effectuée par l'intermédiaire d'un logement et de vis de fixation 231.

À l'observation des figures 1, 2 et 3 on comprend que l'ensemble formé par le support mobile 21 des pointes de serrage P1, P2 et par la ressource de commande continue 3 du serrage/desserrage, c'est-à-dire la came 30 incluant la came de poussée et la came de rappel, forme une commande 1/4 de tour ou 1/2 tour.

Le nombre de pointes de serrage/desserrage équipant le palonnier 21 n'est pas limité à 2, ainsi qu'illustré de manière non limitative sur les figures 1 à 5. En particulier, dans un mode de mise en oeuvre avantageux non limitatif, les dimensions de la bride de serrage/desserrage et de maintien objet de l'invention peuvent être adaptées en largeur, la largeur étant définie comme la dimension, dans la direction orthogonale à la direction de serrage desserrage SD, des rainures constituant la crémaillère 10. Cette adaptation peut par exemple être effectuée par un jeu de différentes bride de serrage/desserrage et de maintien de dimensions différentes, en fonction des dimensions du panneau en plaque à maintenir sur la platine de la machine-outil.

De même, la bride de serrage/desserrage objet de l'invention peut-être, ainsi que représentée en figure 6, adaptée en hauteur c'est-à-dire dans une dimension parallèle aux axes de rotation X30, X33 et X34, en fonction de l'épaisseur réelle du panneau en plaque à fixer sur la platine de la machine-outil. Dans cette situation, ainsi que représenté sur la figure 6, les pointes de serrage/desserrage peuvent être avantageusement distribuées sur le support mobile 21 de manière symétrique par rapport au plan longitudinal de symétrie, plan de coupe A-A de la figure 1, du bâti 2 et du support mobile 21. Ainsi qu'illustré sur la figure précitée, les pointes de serrage/desserrage P1, P2 et P3 peuvent avantageusement être réparties selon un motif s'étendant selon la hauteur de la bride de serrage/desserrage et de maintien objet de l'invention, dans le but d'assurer un meilleur maintien d'un panneau en plaque de plus grande épaisseur.

## Revendications

1. Bride de serrage/desserrage et de maintien d'un panneau en plaque sur une platine d'usinage, ladite bride comportant au moins un corps support (1), un bâti (2) étant en position par rapport au corps support (1) dans la direction de serrage/desserrage, au moins deux pointes de serrage et de maintien (P1, P2) par enfoncement dans l'un des bords latéraux de ce panneau, un logement (20) ménagé dans ledit bâti (2) ; et, placé dans ledit logement, un support mobile (21) desdites au moins deux pointes de serrage et de maintien (P1,P2), émergeant au moins partiellement au travers d'un orifice traversant(22) dudit bâti (2) débouchant dans ledit logement (20); des moyens de commande (3) continue du déplacement, du serrage, du maintien et du desserrage desdites au moins deux pointes dans la direction de serrage, **caractérisée en ce que** ; ledit support mobile (21) constitue un palonnier exécutant la transformation de la commande continue de déplacement desdites au moins deux pointes (P1, P2) en un mouvement de translation simultanée desdites au moins deux pointes dans la direction de serrage/desserrage.

2. Bride de serrage/desserrage selon la revendication 1, **caractérisée en ce que** lesdits moyens de commande (3) continue du déplacement comportent au moins :
- une came (30) comportant une surface d'entraînement profilée (30a) formant came de poussée et entraînée à rotation continue autour d'un axe de rotation(X30) orthogonal à la direction de serrage/desserrage ;
- un galet de contact(31)assurant la liaison mécanique à glissement entre la surface d'entraînement profilée(30a) de la came(30) et le palonnier(21).

3. Bride de serrage/desserrage selon la revendication 1 ou 2, **caractérisée en ce que** lesdits moyens de commande(3) continue comportent en outre un taquet de rappel(32) du support mobile et du palonnier(21), solidaire du palonnier(21) respectivement de la came (30) par l'intermédiaire d'une goupille (33) et d'une goupille de rappel(34).

4. Bride de serrage/desserrage selon la revendication 3, **caractérisée en ce que** la goupille de rappel (34) est solidaire du taquet de rappel(32) et engagée dans une gorge formant came de retour(30b) ménagée dans ladite came(30), ladite came de retour(30b) étant complémentaire de la surface d'entraînement profilée formant came de poussée(30a) de la came(30).

5. Bride de serrage/desserrage selon l'une des revendications 1 à 4, **caractérisée en ce que** l'ensemble formé par le support mobile desdites au moins deux pointes de serrage (P1, P2) et par le moyen de commande(3) continue du serrage/desserrage forme une commande 1/4 de tour ou 1/2 tour.

6. Bride de serrage/desserrage selon l'une des revendications 1 à 5, **caractérisée en ce que** ledit support mobile comporte une pluralité de pointes de serrage distribuées symétriquement sur le support mobile par rapport au plan longitudinal de symétrie du bâti(2) et du support mobile(21).

7. Bride de serrage/desserrage selon l'une des revendications 1 à 6,**caractérisée en ce que** le corps support(1) et le bâti (2) sont réglables en position l'un par rapport à l'autre.

8. Bride de serrage/desserrage selon la revendication 7, **caractérisée en ce que** le corps support(1) et le bâti(2) réglables en position sont mécaniquement liés par une liaison à crémaillère ajustable, les rainures de la crémaillère étant orthogonales au plan longitudinal de symétrie du bâti et du corps support et à la direction de serrage/desserrage.

9. Bride de serrage/desserrage selon l'une des revendications 1 à 8, **caractérisée en ce que** la liaison mécanique entre chaque pointe de serrage (P1, P2) et le support mobile ou palonnier(21) inclut au moins :
- une tige de poussée(23) enfichable dans un logement calibré(210) ménagé dans la face active du palonnier ou support mobile(21), ladite tige de poussée(23) comportant un bossage de fixation (230) à son extrémité libre émergeant d'un logement calibré(210) ;
- une pointe de serrage active présentant un corps de pointe de diamètre adapté à l'orifice traversant(22) du bâti(2) dans lequel cette pointe de serrage active est engagée, l'extrémité non émergente de la pointe de serrage active étant en liaison mécanique avec ledit bossage de fixation (230) de la tige de poussée (23).

## Patentansprüche

1. Klemm-/Löse- und Halteflansch für eine Paneelplatte auf einer Bearbeitungsbühne, wobei der Flansch umfaßt: mindestens einen Stützkörper (1), einen Rahmen (2), der in der Klemm-/Löserichtung bezüglich des Stützkörpers (1) positioniert ist, mindestens zwei Stifte (P1, P2) zum Klemmen und Halten durch Eindrücken in einen der Seitenränder des Paneels, ein in dem Rahmen (2) ausgebildetes Gehäuse (20) und eine in dem Gehäuse ungeordnete bewegliche Stütze (21) der mindestens zwei Klemm- und Haltestifte (P1, P2), die zumindest teilweise über eine den Rahmen (2) durchgreifende Öffnung (22) hervorstehen, die in dem Gehäuse (20) mündet; und Mittel (3) für die kontinuierliche Steuerung der Bewegung, des Festklemmens, des Haltens und des Lösens der mindestens zwei Stifte in der Klemmrichtung, **dadurch gekennzeichnet, dass** die bewegliche Stütze (21) eine Traverse bildet, die die Umwandlung der kontinuierlichen Steuerung der Bewegung der mindestens zwei Stifte (P1, P2) in eine gleichzeitige Translationsbewegung der mindestens zwei Stifte in der Klemm-/Lösungsrichtung durchführt.

2. Klemm-/Löseflansch nach Anspruch 1, **dadurch gekennzeichnet, dass** die Mittel (3) für die kontinuierliche Steuerung der Bewegung zumindest umfassen:
- einen Nocken (30) mit einer profilierten Antriebsfläche, die einen Schubnocken bildet und um eine zur Klemm-/Löserichtung orthogonale Drehachse (X30) kontinuierlich drehend angetrieben wird;
- eine Kontaktrolle (31), die die mechanische Gleitverbindung zwischen der profilierten Antriebsfläche (30a) des Nockens (30) und der Traverse (21) sicherstellt.

3. Klemm-/Löseflansch nach Anspruch 1 oder 2, **dadurch gekennzeichnet, dass** die Mittel (3) für die kontinuierliche Steuerung außerdem einen Rückstellkeil (32) der mobilen Stütze und der Traverse (21) umfassen, der mittels eines Stiftes (33) und eines Rückstellstiftes (34) mit der Traverse (21) bzw. mit dem Nocken (30) fest verbunden ist.

4. Klemm-/Löseflansch nach Anspruch 3, **dadurch gekennzeichnet, dass** der Rückstellstift (34) mit dem Rückstellkeil (32) fest verbunden ist und in eine einen Rückführungsnocken (30b) bildende Keilrille eingreift, die in dem Nocken (30) gebildet ist, wobei der Rückführungsnocken (30b) komplementär zu der den Schubnocken (30a) bildenden profilierten Antriebsfläche des Nockens (30) ausgebildet ist.

5. Klemm-/Löseflansch nach einem der Ansprüche 1 bis 4, **dadurch gekennzeichnet, dass** die durch die bewegliche Stütze der mindestens zwei Klemmstifte (P1, P2) und durch das Mittel (3) für die kontinuierliche Steuerung des Festklemmens/Lösens gebildete Einheit eine Vierteldrehungs- oder Halbdrehungs- Steuerung bildet.

6. Klemm-/Löseflansch nach einem der Ansprüche 1 bis 5, **dadurch gekennzeichnet, dass** die bewegliche Stütze eine Vielzahl von Klemmstiften aufweiset, die bezüglich der Längssymmetrieebene des Rahmens (2) und der beweglichen Stütze (21) symmetrisch über die bewegliche Stütze (21) verteilt sind.

7. Klemm-/Löseflansch nach einem der Ansprüche 1 bis 6, **dadurch gekennzeichnet, dass** der Stützkörper (1) und der Rahmen (2) in ihrer Position zueinander verstellbar sind.

8. Klemm-/Löseflansch nach Anspruch 7, **dadurch gekennzeichnet, dass** der in der Position verstellbare Stützkörper (1) und Rahmen (2) durch eine einstellbare Zahnstangenverbindung mechanisch verbunden sind, wobei die Kerben der Zahnstange orthogonal zur Längssymmetrieebene des Rahmens und des Stützkörpers und zur Klemm-/Löserichtung sind.

9. Klemm-/Löseflansch nach einem der Ansprüche 1 bis 8, **dadurch gekennzeichnet, dass** die mechanische Verbindung zwischen jedem Klemmstift (P1, P2) und der beweglichen Stütze (21) oder der Traverse (21) zumindest umfasst:
- eine Schubstange (23), die in einen kalibrierten Sitz (210) gesteckt werden kann, der in der Wirkfläche der Traverse oder der beweglichen Stütze (21) gebildet ist, wobei die Schubstange (23) einen Befestigungsdorn (230) an ihrem aus dem kalibrierten Sitz (210) hervortretenden freien Ende hat;
- einen aktiven Klemmstift mit einem Klemmkörper, dessen Durchmesser an die den Rahmen (2) durchgreifende Öffnung angepasst ist, in die dieser aktive Klemmstift eingreift, wobei das nicht hervortretende Ende des aktiven Klemmstiftes mechanisch mit dem Befestigungsdorn (230) der Schubstange (23) verbunden ist.

## Claims

1. A flange for clamping/releasing and holding a plate panel on a machining stage, the said flange comprising at least one supporting body (1), a frame (2) being positioned in relation to the supporting body (1) in the clamping/releasing direction, at least two clamping and holding lugs (P1, P2) acting by being pressed into one of the lateral edges of this panel, a housing (20) arranged in the said frame (2); and, placed in the said housing, a mobile support (21) for the said at least two clamping and holding lugs (P1, P2), at least partially emerging through a through-hole (22) of the said frame (2) opening into the said housing (20); and means for continuous control (3) of the movement, clamping, holding and releasing of the said at least two lugs in the direction of clamping, **characterized in that** the said mobile support (21) constitutes a tool yoke executing the transformation of the continuous control of the movement of the said at least two lugs (P1, P2) into a simultaneous translational movement of the said at least two lugs in the clamping/releasing direction,

2. A clamping/releasing flange according to claim 1, **characterised in that** the said means for continuous control (3) of the movement comprise at least:
- one cam (30) having a profiled driving surface (30a) forming a pusher cam and driven in continuous rotation about an axis of rotation (X30) orthogonal to the clamping/releasing direction;
- a contact roller (31) providing the sliding mechanical connection between the profiled driving surface (30a) of the cam (30) and the tool yoke (21).

3. A clamping/releasing flange according to claim 1 or 2, **characterised in that** the said means for continuous control (3) also comprise a return stop (32) of the mobile support and of the tool yoke (21), integral with the tool yoke (21) and the cam (30) by means of a pin (33) and a return pin (34) respectively.

4. A clamping/releasing flange according to claim 3, **characterised in that** the return pin (34) is integral with the return stop (32) and engaged in a groove forming a return cam (30b) arranged in the said cam (30), the said return cam (30b) being complementary to the profiled driving surface forming a pusher cam (30a) of the cam (30).

5. A clamping/releasing flange according to any one of claims 1 to 4, **characterised in that** the assembly formed by the mobile support of the said at least two clamping lugs (P1, P2) and by the means for continuous control (3) of the clamping/releasing forms a 1/4 turn or 1/2 turn control.

6. A clamping/releasing flange according to any one of claims 1 to 5, **characterised in that** the said mobile support comprises a plurality of clamping lugs distributed symmetrically on the mobile support with respect to the longitudinal plane of symmetry of the frame (2) and of the mobile support (21).

7. A clamping/releasing flange according to any one of claims 1 to 6, **characterised in that** the supporting body (1) and the frame (2) are position-adjustable with respect to one another.

8. A clamping/releasing flange according to claim 7, **characterised in that** the position-adjustable supporting body (1) and the frame (2) are mechanically connected by an adjustable connecting rack, the grooves of the rack being orthogonal to the longitudinal plane of symmetry of the frame and of the supporting body and to the clamping/releasing direction.

9. A clamping/releasing flange according to any one of claims 1 to 8, **characterised in that** the mechanical connection between each clamping lug (P1, P2) and the mobile support or tool yoke (21) includes at least:
- a pushrod (23) insertable in a calibrated housing (210) arranged in the active face of the tool yoke or mobile support (21), the said pushrod (23) having a mounting boss (230) at its free end emerging from a calibrated housing (210);
- an active clamping lug having a lug body of a diameter adapted to the through-hole (22) of the frame (2) in which this active clamping lug is engaged, the non-emerging end of the active clamping lug being in mechanical connection with the said mounting boss (230) of the pushrod (23).
